# EUROPÄISCHE PATENTSCHRIFT

(11) **EP 2 363 314 B1**
(45) Veröffentlichungstag und Bekanntmachung des Hinweises auf die Patenterteilung: **27.05.2015**
(21) Anmeldenummer: 10002057.7
(22) Anmeldetag: 01.03.2010
(51) Int. Cl.: B60M 1/26, B60M 1/30

(54) **Vorrichtung zur Kopplung von elastischen und starren Fahrleitungssystemen**
Device for coupling elastic and rigid contact wire systems
Dispositif de couplage de systèmes de caténaires électriques et fixes

(43) Veröffentlichungstag der Anmeldung: 07.09.2011
(73) Patentinhaber: Furrer + Frey AG, 3000 Bern 6 (CH)
(72) Erfinder: Furrer, Beat, 3012 Bern (CH); Principe, Patrick, 3015 Bern (CH)
(74) Vertreter: von Bülow, Tam

(56) Entgegenhaltungen:
- DE-U1- 29 621 605
- JP-A- 2007 307 925
- HEROULT J C: "LA CATENAIRE RIGIDE" REVUE GENERALE DES CHEMINS DE FER, CENTRALE DES REVUES DUNOD-GAUTHIER-VILLARS. PARIS, FR, Nr. 9, 1. September 1992 (1992-09-01), Seiten 43-52, XP000307274 ISSN: 0035-3183

## Beschreibung

Die Erfindung bezieht sich auf eine Vorrichtung zur Kopplung von elastischen und starren Fahrleitungssystemen zur Speisung von elektrischen Triebfahrzeugen gemäß dem Oberbegriff des Patentanspruches 1.

Eine solche Vorrichtung ist aus der EP 0 828 629 B1 bekannt. Dort wird vorgeschlagen, einen langgestreckten Federbalken im Übergangsbereich zwischen dem starren Fahrleitungssystem und dem elastischen Fahrleitungssystem anzuordnen. Die mechanische Steifigkeit des Federbalkens nimmt von dessen freiem Ende zu einem eingespannten starren Ende stetig zu, wobei ein durchgehender Fahrdraht von dem elastischen Fahrleitungssystem zu dem starren Fahrleitungssystem geführt ist und über die gesamte Länge des Federbalkens an diesem durch Klemmung befestigt ist. Der Federbalken ist mit der Stromschiene durch Stoßlaschen, die im Inneren der Profile des Federbalkens und einer starren Stromschiene angeordnet sind, mechanisch und elektrisch gekoppelt.

Starre Fahrleitungssysteme mit Stromschienen werden meist an Stellen mit beschränkten Raumverhältnissen eingesetzt, wie z.B. in Tunneln oder Überbauten, da sie eine geringere Systemhöhe bedingen. Elastische Fahrleitungssysteme haben durch europäische Normen definierte Fahrdrähte, die mittels in kurzen Abständen aufgehängten Hängedrähten an einem Tragseil aufgehängt sind, wobei die Tragpunkte an den Tragseilen etwa 30 bis 180 cm höher als der Fahrdraht liegen. Ferner sind die Fahrdrähte und Tragseile mit etwa 8 bis 30 kN mechanisch gespannt, um Beschleifgeschwindigkeiten durch die Stromabnehmer von elektrisch angetriebenen Fahrzeugen, insbesondere Schienenfahrzeugen, bis zu 500 km/h zu erlauben. Die notwendigen Spannvorrichtungen sind komplexe Anlagen, welche insbesondere in unterirdisch verlegten Tunnelstrecken schwierig anzuordnen sind.

Durch den Federbalken wird ein elastischer übergangs-oder Kopplungsbereich realisiert, dessen Elastizität von seinem stromschienenseitigen festen Ende zum fahrleitungsseitigen freien Ende zunimmt. Die Kopplungsstelle zwischen starren und flexiblen Fahrleitungsteilen wird somit über eine größere Strecke verteilt, wodurch die infolge des Zusammenwirkens zwischen Stromabnehmer und Fahrdraht entstehende Wechselbiegebeanspruchung des Fahrdrahtes auf eine größere mechanische Länge verteilt wird und damit besser gedämpft wird. Aufgrund der elastischen Kopplung ist das Risiko von Ermüdungsbrüchen am Fahrdraht stark reduziert.

In der Praxis hat sich jedoch herausgestellt, dass die Vorrichtung gemäß dem Stand der Technik für mehrdrähtige Fahrleitungen nur bedingt geeignet ist. Gleichstrombahnen und Metro-Strecken benutzen im elastischen Bereich der Fahrleitungssysteme häufig zwei parallel geführte Fahrdrähte, um bei den niedrigen Versorgungsspannungen von 750 bis 1500 Volt die hohen Ströme von bis zu 4000 Ampère beherrschen zu können. Im Übergangsbereich würde dies auch drei zum Fahrdraht der starren Stromschiene parallel geführte Federbalken bedingen. Eine Lösung, bei der die zwei Fahrdrähte des elastischen Fahrsystems nur unmittelbar mit dem freien Ende des den Fahrdraht des starren Fahrleitungssystems haltenden Federbalkens verbunden wurde, hat sich bei internen versuchen der Anmelderin aufgrund des dynamischen Verhaltens nicht bewährt.

Aufgabe der Erfindung ist es, die Vorrichtung der eingangs genannten Art dahingehend zu verbessern, dass sie bei einfachem Aufbau auch einen Übergang von zwei parallelen Fahrdrähten eines elastischen Fahrleitungssystems auf ein starres Fahrleitungssystem erlaubt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung besteht darin, im Übergangsbereich zwischen dem starren und dem elastischen Fahrleitungssystem, der durch die Länge des Federbalkens definiert ist, drei Fahrdrähte parallel zueinander in einer Ebene anzuordnen, wobei der vom starren Fahrleitungssystem kommende erste Fahrdraht im wesentlichen über die gesamte Länge des Federbalkens eingespannt ist und am freien Ende des Federbalkens endet. Die von der Strecke kommenden Doppelfahrdrähte werden an mehreren Stellen des Federbalkens mit Mehrfachklemmen fixiert. Damit ergibt sich ein "sanfter" Übergang der doppeldrähtigen Fahrleitung von der offenen Strekke mit dem elastischen Fahrleitungssystem zu der Stromschiene des starren Fahrleitungssystems. Durch die Parallelführung der drei Fahrdrähte entlang des Federbalkens und die Befestigung der Doppelfahrdrähte an den Mehrfachklemmen werden Kräfte und insbesondere Zugkräfte der doppeldrähtigen Fahrleitung bereits längs des Federbalkens abgebaut, wodurch der sanfte Übergang erreicht wird.

An mehrere Stellen des Federbalken und ggf. am starren Ende des Federbalkens oder an dem zum Federbalken weisenden Ende der starren Stromschiene ist eine Dreifachklemme vorgesehen, die die drei Fahrdrähte fixiert. Durch Durchbiegung oder Schwingungen der von der offenen Strecke kommenden doppeldrähtigen Fahrdrähte verursachte Kräfte werden somit in den Federbalken eingekoppelt und dort gedämpft bzw. abgebaüt und nicht erst in der starren Stromschiene, während der Federbalken seinerseits für einen sanften Übergang des Stromabnehmers eines Fahrzeuges von den Fahrdrähten der offenen Strecke auf den Fahrdraht der Stromschiene sorgt.

Im folgenden wird die Erfindung anhand eines Ausführungsbeispieles im Zusammenhang mit der Zeichnung ausführlicher erläutert. Es zeigt:
- Fig. 1: eine Seitenansicht der Vorrichtung nach der Erfindung;
- Fig. 2: eine Draufsicht auf die Vorrichtung der Fig. 1;
- Fig. 3: eine vergrößerte Darstellung des Bereiches A in Ansicht von unten;
- Fig. 4: eine vergrößerte Darstellung des Bereiches A in Seitenansicht der Fig. 1;
- Fig. 5: eine vergrößerte Darstellung des Bereiches A der Fig. 1 und 2 in Ansicht von oben;
- Fig. 6: einen Schnitt längs der Linie E-E der Fig. 5;
- Fig. 7: einen Querschnitt längs der Linie B-B der Fig. 4;
- Fig. 8: einen Schnitt längs der Linie F-F der Fig. 4;
- Fig. 9: eine vergrößerte Seitenansicht des Bereiches C der Fig. 1;
- Fig. 10: einen Schnitt längs der Linie D-D der Fig. 9;
- Fig. 11: einen Schnitt längs der Linie K-K der Fig. 9;
- Fig. 12: eine vergrößerte Seitenansicht des Bereiches H der Fig. 1;
- Fig. 13: einen Schnitt längs der Linie L-L der Fig. 12; und
- Fig. 14: eine vergrößerte Seitenansicht des Bereiches J der Fig. 1.

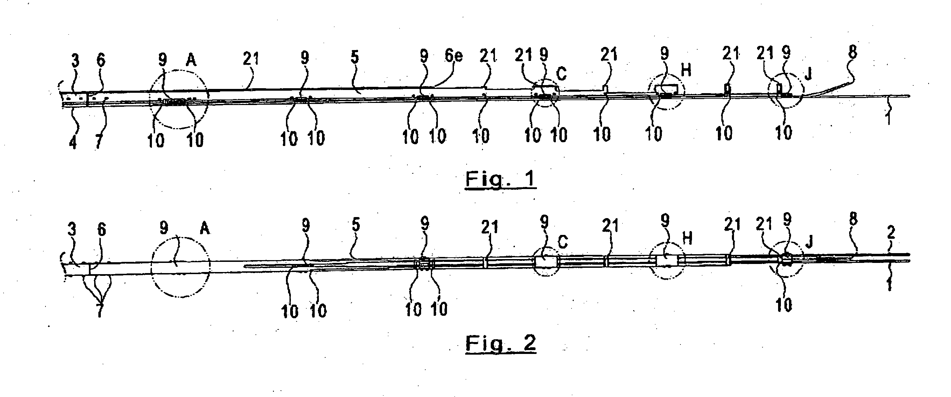

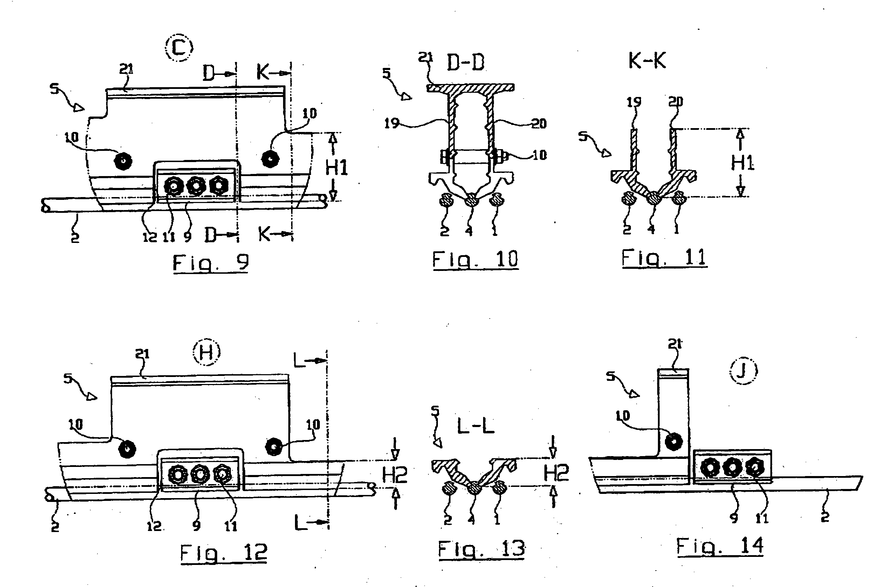

Die Fig. 1 und 2 zeigen die Vorrichtung nach der Erfindung in Seitenansicht (Fig. 1) und Draufsicht (Fig. 2). Zwei parallele Fahrdrähte 1 und 2 eines elastischen Fahrleitungssystems bekannter Bauart sollen in ein starres Fahrleitungssystem mit einer Stromschiene 3 überführt werden. Die Stromschiene 3 hat ein weiter unten näher beschriebenes Querschnittsprofil, das einen ersten Fahrdraht 4 hält. In einem Übergangsbereich zwischen der starren Stromschiene 3 und elastischen Fahrleitungssystem ist ein langgestreckter Federbalken 5 angeordnet, der in Richtung vom elastischen Fahrleitungssystem der beiden Fahrdrähte 1 und 2 zur starren Stromschiene 3 hin abnehmende Elastizität bzw. zunehmende Steifigkeit hat, was beispielsweise dadurch erreicht wird, dass die Höhe (in Seitenansicht der Fig. 1) des Federbalkens 5 und damit dessen Biegesteifigkeit längs des Federbalkens 5 unterschiedlich groß ist. Einzelheiten des Federbalkens 5 und verschiedene mögliche Varianten desselben sind der EP 0 828 629 B1 zu entnehmen. Ein an die Stromschiene 3 angrenzendes Ende 6 des Federbalkens 5 ist über eine nicht dargestellte Kopplungslasche mit der Stromschiene 3 starr verbunden, wobei in Fig. 1 die dazugehörigen Schrauben 7 zu sehen sind. Der Federbalken 5 ist generell aus einem Profil einer starren Stromschiene 3 hergestellt und hat im Bereich seines an die Stromschiene 3 angrenzenden Ende 6 bis zu der in Fig. 1 mit 6e bezeichnenden Stelle ein mit der starren Stromschiene 3 identisches Querschnittsprofil mit Ausnahme von Ausnehmungen für Mehrfachklemmen 9. Im Bereich von der Stelle 6e bis zum freien Ende des Federbalkens 5 ist das Profil so bearbeitet, das von oben, d.h. der den Fahrdrähten abgewandten Seite des Profils Material abgetragen ist und zwar in unterschiedlicher Tiefe um die Federungseigenschaften des Federbalkens zu realisieren, wobei an Zwischenstellen schmale Bereiche mit dem vollständigen Profil stehengelassen sind (vgl. Fig. 10 und 14).

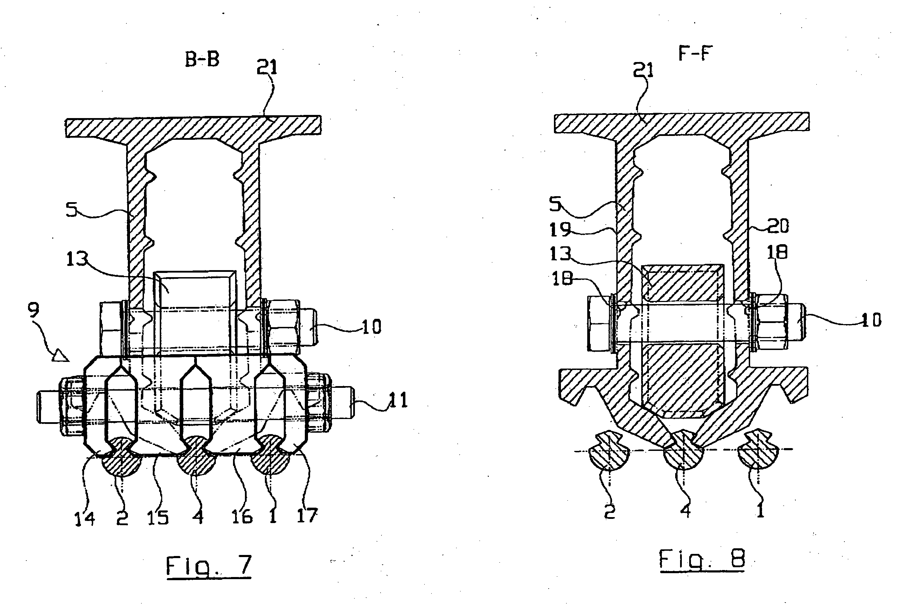

Der erste Fahrdraht 4 erstreckt sich durchgehend von der Stromschiene 3 bis in den Bereich eines freien Endes des Federbalkens 5 und ist im wesentlichen über die gesamte Länge des Federbalkens 5 in dessen Profil eingeklemmt. Das Ende 8 des Fahrdrahtes 4 ist nach oben aufgebogen, damit sich ein Stromabnehmer eines Fahrzeuges dort nicht "verheddern" kann. Die Doppelfahrdrähte 1 und 2 des elastischen Fahrleitungssystems sind zusammen mit dem ersten Fahrdraht 4 an Mehrfachklemmen 9 befestigt, wobei in Längsrichtung des Federbalkens 5 mehrere solcher Mehrfachklemmen verteilt angeordnet sind. Einzelheiten dieser Mehrfachklemmen werden im Zusammenhang mit Fig. 7 gezeigt.

Im Bereich zwischen den Mehrfachklemmen 9 verlaufen die Fahrdrähte 1 und 2 frei von dem Federbalken 5, während der erste Fahrdraht 4 über die gesamte Länge des Federbalkens fixiert ist, mit Ausnahme der Stellen der Mehrfachklemmen 9. Die Fahrdrähte 1 und 2 enden im Bereich derjenigen Mehrfachklemme 9, die dem starren Ende 6 des Federbalkens 5 am nächsten gelegen ist. Somit laufen im Prinzip die drei Fahrdrähte 1, 2 und 4 im wesentlichen über die gesamte Länge des Federbalkens 5 parallel zueinander und parallel zur Fahrebene. Sie haben somit alle den gleichen konstanten Abstand zur Fahrebene, d.h. zur Schienenebene des Schienenfahrzeuges.

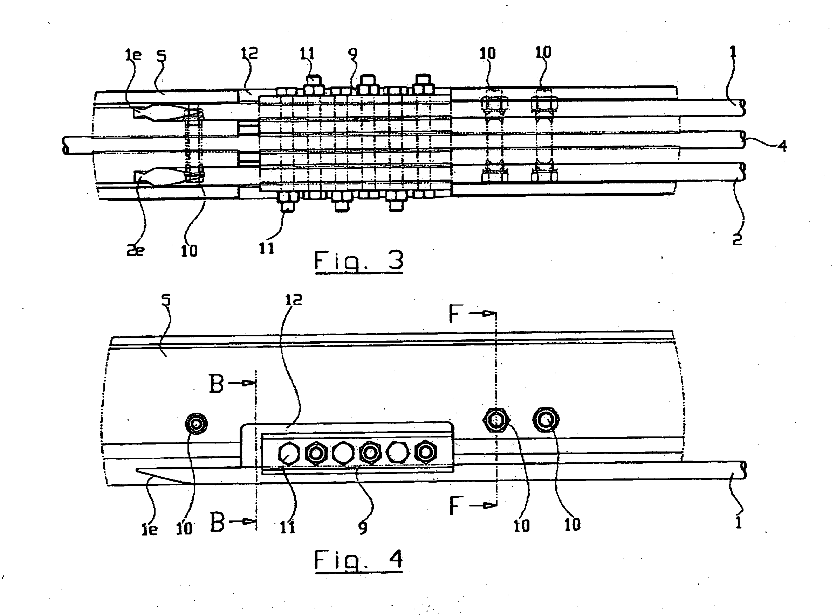

Einzelne Stellen des Federbalkens die in den Fig. 1 und 2 mit Kreisen und den Buchstaben A, C, H und J bezeichnet sind, werden im Zusammenhang mit den Fig. 3 bis 14 ausführlicher beschrieben.

Zum leichteren Verständnis der Fig. 3 sind die in der Ansicht von unten nicht sichtbaren Schrauben bzw. Schraubenteile in dünnen gestrichelten Linien dargestellt. Ebenso sind die nicht sichtbaren Linien der Fahrdrähte 1, 2 und 4, die durch das Profil des Federbalkens oder das der Mehrfachklemme 9 verdeckt sind, durch gestrichelte Linien dargestellt.

Fig. 3 zeigt eine vergrößerte Ansicht des Bereiches A der Fig. 1 und 2 auf die zur Fahrebene weisende Unterseite des Federbalkens 5 und die drei Fahrdrähte 1, 2 und 4.

Der Fahrdraht 4 ist vom Profil des Federbalkens 5 und von den Mehrfachklemmen 9 gehalten, während die Doppelfahrdrähte 1 und 2 nur von den Mehrfachklemmen 9 gehalten sind.

Die Fahrdrähte 1 und 2 haben schräg abgeschnittene Enden le und 2e, die kurz hinter der letzten Mehrfachklemme 9 liegen, d.h. hinter der der starren Stromschiene 3 am nächsten gelegenen Mehrfachklemme 9.

Im Bereich der Mehrfachklemmen 9 hat das Profil des Federbalkens 5 seitliche Ausnehmungen 12, in die die Mehrfachklemmen 9 eingreifen.

Die einzelnen Mehrfachklemmen 9 sind in gleichen Abständen von beispielsweise 965 mm längs des Federbalkens 5 verteilt, wobei allerdings auch unterschiedliche Abstände verwendet werden können. Im konkret dargestellten Ausführungsbeispiel sind 6 Mehrfachklemmen vorhanden.

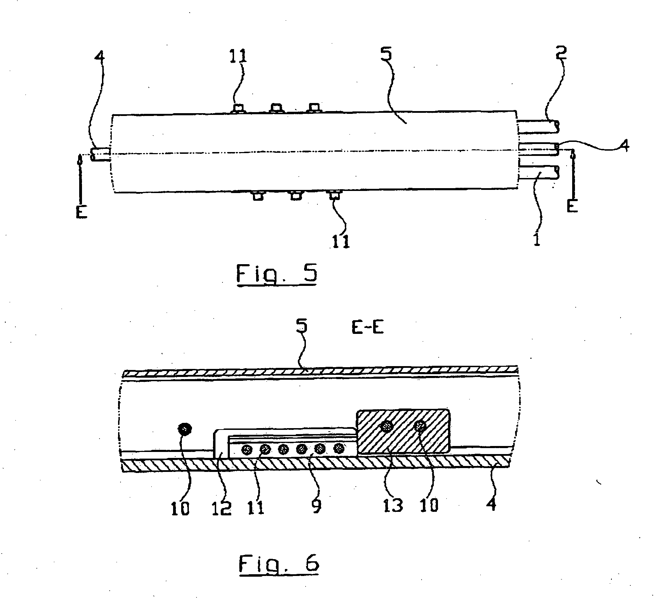

In der Draufsicht auf den Bereich A gemäß Fig. 5 erkennt man, dass das Profil des Federbalkens 5 in diesem Bereich oben geschlossen ist und dass die Schrauben 11 in wechselnden Richtungen durchgesteckt sind.

Fig. 4 zeigt den Bereich A in Seitenansicht und lässt die Ausnehmung 12 sowie das schräg abgeschnittene Ende le des Fahrdrahtes 1 gut erkennen.

Fig. 5 zeigt, dass das Profil des Federbalkens 5 imBereich A oben geschlossen ist. (vgl. auch Fig. 7 und 8)

Fig. 6 zeigt einen Schnitt längs der Linie E-E der Fig. 5. Man erkennt deutlicher die Ausnehmung 12 für die Mehrfachklemme 9 und weiter, dass im Inneren des Profils des Federbalkens 5 ein Halteblock 13 angeordnet ist, der durch die Schrauben 10 am Federbalken gehalten wird. Einzelheiten hierzu sind den Fig. 7 und 8 zu entnehmen. Generell können eine Mehrfachklemme 9 und ein Halteblock 13 auch an der starren Stromschiene 3 in analoger weise vorgesehen sein, um Zugkräfte direkt in die Stromschiene 3 einzuleiten. Im dargestellten Ausführungsbeispiel sind der Halteblock 13 und die zugehörige Mehrfachklemme 9 in dem Bereich des Federbalkens 5 angeordnet, der noch das volle Profil der starren Stromschiene hat. Der Halteblock 13 bietet der zugeordneten Mehrfachklemme 9 genügend Abstützfläche, um die von den Fahrdrähten 1 und 2 der freien Strecke kommenden Zugkräfte aufzunehmen und in das Stromschienensystem einzuleiten.

Der Halteblock 13 dient als Begrenzungsanschlag für die Mehrfachklemme 9 und leitet damit Zugkräfte der gespannten Fahrdrähte 1 und 2 in das Profil des Federbalkens 5 und/oder der Stromschiene 3. Der Halteblock 13 ist also auf der freien Strecke (elastisches Fahrleitungssystem) hinweisenden Seite der Mehrfachklemmen 9 angeordnet.

Fig. 7 zeigt einen Schnitt längs der Linie B-B der Fig. 4. Man sieht also auf die Stirnseite der Mehrfachklemme 9, die nicht geschnitten ist, wobei die Schnittlinie durch die Ausnehmung 12 der Fig. 4 verläuft.

Die Mehrfachklemme 9 ist hier als Dreifachklemme ausgebildet und hat vier Spannklauen 14, 15, 16 und 17, von denen die Spannklauen 14 und 17 äußere und die Spannklauen 15 und 16 innere Spannklauen sind. Die Spannklauen 14 und 15 bilden ein erstes Paar und die Spannklauen 16 und 17 ein zweites Paar, wobei die Paare spiegelsymmetrisch zu einer vertikalen Mittelachse des ersten Fahrdrahtes 4 angeordnet sind. Die äußeren Spannklauen 14 und 17 spannen die Außenseite der Fahrdrähte 2 und 1, während die beiden Inneren Spannklauen 15 und 16 jeweils die Innenseite der Fahrdrähte 2 und 1 einspannen und gemeinsam auch den ersten Fahrdraht 4. Dementsprechend haben die Spannklauen scharfkantige Spannvorsprünge, die in die Fahrdrähte formschlüssig eingreifen. Im Bereich der den Fahrdrähten 1, 2 und 4 abgewandten Oberseite liegende Seitenflächen der Spannklauen 14-17 stehen jeweils mit Flächen benachbarter Spannklauen in Kontakt, wobei alle Spannklauen Durchgangsbohrungen aufweisen, durch die hindurch die Schrauben 11 hindurchragen und mit Schraubmuttern verschraubt werden.

Aufgrund der oben genannten Ausnehmung 12 ist auch der erste Fahrdraht 4 im Bereich der Mehrfachklemme 9 nur durch die Spannklauen 15 und 16 gehalten, da das Profil des Federbalkens 5 hier die Ausnehmung 12 hat. Vor und hinter der Mehrfachklemme 9 ist das Profil des Federbalkens 5 wieder vollständig und spannt den ersten Fahrdraht 4 in bekannter Weise ein, während die Fahrdrähte 1 und 2 außerhalb der Mehrfachklemme 9 frei laufen wie in Fig. 8 zu erkennen ist.

In der zur offenen Strecke, d.h. zum elastischen Fahrleitungssystem gesehenen Blickrichtung befindet sich hinter der Mehrfachklemme 9 der Halteblock 13 der durch die Schraube 10 an den Federbalken 5 befestigt ist. Die beiden mittleren Spannklauen 15 und 16 sind an dem Halteblock 13 abgestützt, der somit die von der offenen Strecke über die Fahrdrähte 1 und 2 wirkenden Zugkräfte auffängt und in den Federbalken 5 (oder die starre Stromschiene 3) einleitet.

In Fig. 7 sind die durch die Spannklauen 14-17 oder die Schrauben 10 und 11 verdeckten Teile des Profiles des Federbalkens 5 in dünnen gestrichelten Linien dargestellt. Die Schrauben 10 sind beidseitig der Mehrfachklemmen 9 sowie im Bereich des Federbalkens zusätzlich auch an den Stellen mit dem vollen Querschnittsprofil angeordnet um ein Aufspreizen des Profiles zu unterbinden und den Fahrdraht 4 sicher einzuspannen.

Die Mehrfachklemmen 9 sind somit nicht unmittelbar am Federbalken 5 befestigt, sondern in Richtung der Fahrdrähte 1, 2 und 4 zur offenen Strecke hin lediglich an dem Halteblock 13 abgestützt und ansonsten über den ersten Fahrdraht 4 mit dem Profil des Federbalkens 5 verbunden. Die Mehrfachklemme 9 kann daher relativ zu dem Federbalken 5 kleinere Bewegungen ausführen und damit Schwingungen der Fahrdrähte dämpfen und thermisch bedingte Längenänderungen ausgleichen.

Fig. 8 zeigt einen Schnitt längs der Linie F-F der Fig. 4. Der Federbalken 5 hat hier (noch) das Profil der starren Stromschiene 3. Es handelt sich um ein Standardprofil, das in bekannter Weise den ersten Fahrdraht 4 einspannt. Abweichend von dem Standardprofil hat hier der Federbalken eine Durchgangsbohrung 18 zur Aufnahme der Schraube 10, mit der der Halteblock 13 an dem Federbalken 5 befestigt wird. Die Breite des Halteblockes 13 ist dabei kleiner als die innere lichte Weite der beiden vertikalen Schenkel 19 und 20 des Profiles des Federbalkens 5, so dass der Halteblock 13 das Einspannen des Fahrdrahtes 4, nicht behindert. Die Schraube 10 dient hier also gleichzeitig zum Halten des Halteblockes 13 und zum Einspannen des Fahrdrahtes 4.

Die Fig. 9 zeigt eine Seitenansicht des Federbalkens 5 an der Stelle C der Fig. 1. Die Fig. 10 und 11 zeigen Schnitte längs der Linien D-D und K-K der Fig. 9.

In analoger Weise zeigt Fig. 12 eine Seitenansicht des Federbalkens 5 an der Stelle H der Fig. 1.

Fig. 13 zeigt einen Schnitt längs der Linie L-L der Fig. 12.

Aus den Fig. 9 bis 13 ist zu erkennen, dass der Federbalken 5 an einigen Stellen und insbesondere im Bereich der Mehrfachklemmen 9 ein geschlossenes Profil entsprechen Fig. 10 hat, bei dem die beiden vertikalen Schenkel 19 und 20 an ihren den Fahrdrähten 1,2,4 abgewandten Enden durch einen horizontalen Schenkel 21 miteinander verbunden sind, der beidseitig über die vertikalen Schenkel 19 und 20 hinausragt.

In anderen Bereichen, die durch die Schnitte K-K und L-L dargestellt sind, sind dagegen die vertikalen Schenkel 19 und 20 verkürzt und der horizontale Schenkel fehlt, wobei die Höhen H1 und H2 and den verschiedenen Stellen zur Einstellung der Federungseigenschaften des Federbalkens 5 unterschiedlich sind. Weiter ist den Fig. 9 und 10 deutlich zu entnehmen, dass der Federbalken 5 im Bereich der Mehrfachklemmen 9 die Ausnehmung 12 haben, in die die Mehrfachklemme 9 eingesetzt ist, wobei die Ausnehmung 12 in Längsrichtung der Fahrdrähte größer ist als die Mehrfachklemme 9, so dass letztere in Längsrichtung der Fahrdrähte eine gewisse Beweglichkeit hat.

Fig. 14 zeigt eine vergrößerte Darstellung der Stelle J der Fig. 1 mit dem freien Ende des Federbalkens 5, das wiederum das Profil gemäß Fig. 10 hat sowie eine Schraube 10 zum Einspannen des ersten Fahrdrahtes 4. In Richtung zur offenen Strecke mit den elastischen Fahrdrähten ist außerhalb des Federbalkens 5 noch eine Mehrfachklemme 9 angeordnet, die somit keine unmittelbare Verbindung mit dem Federbalken 5 hat.

## Patentansprüche

1. vorrichtung zur Kopplung von elastischen und starren Fahrleitungssystemen zur speisung von elektrischen Triebfahrzeugen, mit einem im Übergangsbereich zwischen dem starren und dem elastischen Fahrleitungssystem angeordneten, langgestreckten Federbalken (5), dessen Steifigkeit in Längsrichtung vom elastischen Fahrleitungssystem zum starren Fahrleitungssystem hin zunimmt und mit einem am starren Fahrleitungssystem (3) und am Federbalken (5) gehaltenen ersten Fahrdraht (4),
**dadurch gekennzeichnet,**
**dass** zwei Fahrdrähte (1, 2) des elastischen Fahrleitungssystems längs des Federbalkens (5) parallel zum ersten Fahrdraht (4) angeordnet sind,
**dass** alle drei Fahrdrähte (1, 2, 4) an mehreren, längs des Federbalkens (5) verteilt angeordneten Mehrfachklemmen (9) befestigt sind und
**dass** die Mehrfachklemmen (9) in Ausnehmungen (12) des Federbalkens (5) angeordnet sind.

2. Vorrichtung nach Anspruch 1, **dadurch gekennzeichnet,**
**dass** die Mehrfachklemmen (9) jeweils gleiche Abstände zur benachbarten Mehrfachklemme haben.

3. Vorrichtung nach Anspruch 1, **dadurch gekennzeichnet,**
**dass** die Länge der Mehrfachklemmen (9) in Längsrichtung der Fahrdrähte (1, 2, 4) kleiner ist als die Länge der zugeordneten Ausnehmung (12).

4. Vorrichtung nach einem der Ansprüche 1 bis 3, **dadurch gekennzeichnet,**
**dass** mindestens eine der Mehrfachklemmen (9) in Richtung zum elastischen Fahrleitungssystem an einem Halteblock (13) abgestützt ist und dass der Halteblock (13) mit dem Federbalken (5) oder der starren Stromschiene (3) fest verbunden ist.

5. Vorrichtung nach Anspruch 4, **dadurch gekennzeichnet,**
**dass** die dem starren Fahrleitungssystem (3) nächst gelegene Mehrfachklemme (9) an dem Halteblock (13) abgestützt ist.

6. Vorrichtung nach einem der Ansprüche 4 oder 5, dadurch gekennseichnet,
dass nur die dem starren Fahrleitungssystem (3) nächst gelegene Mehrfachklemme (9) an dem Halteblock (13) abgestützt ist.

7. Vorrichtung nach einem der Ansprüche 1 bis 6, **dadurch gekennzeichnet,**
**dass** die dem elastischen Fahrleitungssystem nächst gelegene Mehrfachklemme (9) frei vom Federbalken (5) ist.

8. Vorrichtung nach einem der Ansprüche 1 bis 7, **dadurch gekennzeichnet,**
**dass** der erste Fahrdraht (4) im Bereich der Mehrfachklemmen (9) nur an der zugeordneten Mehrfachklemme (9) befestigt ist.

9. Vorrichtung nach einem der Ansprüche 1 bis 8, **dadurch gekennzeichnet,**
**dass** die Mehrfachklemmen (9) zwei spiegelsymmetrisch angeordnete Paare von Spannklauen (14, 15 und 16, 17) aufweisen, die jeweils einen der Fahrdrähte (2, 1) des elastischen Fahrleitungssystems einspannen und dass jeweils eine Spannklaue (15, 16) der Paare von Spannklauen den ersten Fahrdraht (4) des starren Fahrleitungssystems einspannt.

10. Vorrichtung nach Anspruch 9, **dadurch gekennzeichnet,**
**dass** die den Fahrdrähten (1, 2, 4) abgewandten Enden der Spannklauen (14, 15, 16, 17) mit Seitenflächen der jeweils benachbarten Spannklaue in Kontakt sind und dass alle Spannklauen (14-17) Durchgangsbohrungen zur Aufnahme von mindestens einer Schraube (11) aufweisen.

## Claims

1. Device for the coupling of elastic and rigid contact line systems for the supply of power to electrical locomotives, with an elongated cantilever (5) located in the transition area between the rigid and the elastic contact line system, whose rigidity increases in the longitudinal direction from the elastic contact line system to the rigid contact line system
and with a first contact wire (4), which is held on the rigid contact line system (3) and on the cantilever (5),
**characterized in that**
two contact wires (1, 2) of the elastic contact line system are located along the cantilever (5) parallel to the first contact wire (4),
**in that** all three contact wires (1, 2, 4) are affixed on several multiple clamps (9) situated in a distributed manner along the cantilever (5) and **in that** the multiple clamps (9) are located in recesses (12) of the cantilever (5).

2. Device according to Claim 1, **characterized in that** each of the multiple clamps (9) has the same distance to the adjacent multiple clamp.

3. Device according to Claim 1, **characterized in that** the length of the multiple clamps (9) is shorter in the longitudinal direction of the contact wires (1, 2, 4) than the length of the correlated recess (12).

4. Device according to one of Claims 1 to 3, **characterized in that** at least one of the multiple clamps (9) is supported on a holding block (13) in the direction of the elastic contact line system and **in that** the holding block (13) is firmly connected with the cantilever (5) or the rigid power track (3).

5. Device according to Claim 4, **characterized in that** the multiple clamp (9) closest to the rigid contact line system (3) is supported on the holding block (13).

6. Device according to one of Claims 4 or 5, **characterized in that** only the multiple clamp (9) closest to the rigid contact line system (3) is supported on the holding block (13).

7. Device according to one of Claims 1 to 6, **characterized in that** the multiple clamp (9) closest to the elastic contact line system is free of the cantilever (5).

8. Device according to one of Claims 1 to 7, **characterized in that** in the area of the multiple clamps (9), the first contact wire (4) is affixed only on the correlated multiple clamp (9).

9. Device according to one of Claims 1 to 8, **characterized in that** the multiple clamps (9) have two pairs of clamping claws (14, 15 and 16, 17) located in a mirror-symmetrical manner, each of which clamps one of the contact wires (2, 1) of the elastic contact line system, and **in that** a clamping claw (15, 16) of the pair of clamping claws clamps the first contact wire (4) of the rigid contact line system.

10. Device according to Claim 9, **characterized in that** the ends of the clamping claws (14, 15, 16, 17) turned away from the contact wires (1, 2, 4) are in contact with side areas of the adjacent clamping claw and **in that** all clamping claws (14-17) have passage boreholes to hold at least one screw (11).

## Revendications

1. Dispositif de couplage de systèmes de caténaire élastique et fixe servant à alimenter des véhicules moteur électriques, au moyen d'une barre ressort allongée (5), disposée dans la zone de transition entre le système de caténaire fixe et le système de caténaire élastique, dont la rigidité augmente dans le sens longitudinal depuis le système de caténaire élastique vers le système de caténaire fixe et au moyen d'un premier fil de contact (4) fixé au système de caténaire fixe (3) et à la barre ressort (5),
**caractérisé**
**en ce que** deux fils de contact (1, 2) du système de caténaire élastique sont disposés le long de la barre ressort (5) parallèlement au premier fil de contact (4).
**en ce que** les trois fils de contact (1, 2, 4) sont fixés à plusieurs pinces multiples (9) réparties uniformément le long de la barre ressort (5) et
**en ce que** les pinces multiples (9) sont disposées dans des logements (12) de la barre ressort (5).

2. Dispositif selon la revendication 1, **caractérisé en ce que** les pinces multiples (9) ont les mêmes distances d'éloignement respectives vis-à-vis des pinces multiples avoisinantes.

3. Dispositif selon la revendication 1, **caractérisé en ce que** la longueur des pinces multiples (9) est plus petite dans le sens de la longueur des fils de contact (1, 2, 4) que la longueur du logement correspondant (12).

4. Dispositif selon l'une des revendications 1 à 3, **caractérisé**
**en ce que** au moins une des pinces multiples (9) s'appuie contre un bloc d'arrêt (13) dans la direction du système de caténaire élastique et que le bloc d'arrêt (13) est solidaire de la barre ressort (5) ou de la barre conductrice fixe (3).

5. Dispositif selon la revendication 4, **caractérisé en ce que** la pince multiple (9) la plus proche du système de caténaire fixe (3) s'appuie sur le bloc d'arrêt (13).

6. Dispositif selon l'une des revendications 4 ou 5, **caractérisé**
**en ce que** seule la pince multiple (9) la plus proche du système de caténaire fixe (3) s'appuie sur le bloc d'arrêt (13).

7. Dispositif selon l'une des revendications 1 à 6, **caractérisé**
**en ce que** la pince multiple (9) la plus proche du système de caténaire élastique est dégagée de la barre ressort (5).

8. Dispositif selon l'une des revendications 1 à 7, **caractérisé**
**en ce que** le premier fil de contact (4) dans la zone des pinces multiples (9) est fixé seulement à la pince multiple correspondante (9).

9. Dispositif selon l'une des revendications 1 à 8, **caractérisé**
**en ce que** les pinces multiples (9) présentent deux paires de pinces de serrage disposées en symétrie miroir (14, 15 et 16, 17), qui enserrent respectivement l'un des fils de contact (2, 1) du système de caténaire élastique et en ce qu'une pince de serrage respective (15, 16) des paires de pinces de serrage enserre le premier fil de contact (4) du système de caténaire fixe.

10. Dispositif selon la revendication 9, **caractérisé en ce que** les extrémités des pinces de serrage (14, 15, 16, 17) opposées aux fils de contact (1, 2, 4) sont en contact avec des côtés de la pince de serrage respectivement voisine et **en ce que** toutes les pinces de serrage (14-17) présentent des alésages traversants servant à recevoir au moins une vis (11).
